# EUROPEAN PATENT APPLICATION

(11) **EP 1 542 399 A1**
(43) Date of publication of application: **15.06.2005**
(21) Application number: 03737860.1
(22) Date of filing: 02.07.2003
(51) Int. Cl.: H04L 12/28

(54) **THE METHOD FOR CONNECTING DEVICES IN DYNAMIC FAMILY NETWORKING**

(30) Priority: 16.09.2002 CN 02130660
(71) Applicant: Legend (Beijing) Limited, Haidan District, Beijing 100085 (CN)
(72) Inventor: HUANG, Jingnan, Haidian District, Beijing 100085 (CN); LUO, Yujin, Haidian District, Beijing 100085 (CN); ZHANG, Yuanyi, Haidian District, Beijing 100085 (CN); LIU, Xiangdong, Haidian District, Beijing 100085 (CN); ZHUANG, Weifeng, Haidian District, Beijing 100085 (CN); ZHANG, Dekui, Haidian District, Beijing 100085 (CN); REN, Yanpin, Haidian District, Beijing 100085 (CN); LI, Ming, Haidian District, Beijing 100085 (CN); MENG, Chuang, Haidian District, Beijing 100085 (CN); JIANG, Shan, Haidian District, Beijing 100085 (CN)
(74) Representative: Pawlyn, Anthony Neil
(86) International application number: PCT/CN2003/000524
(87) International publication number: WO 2004/025899

(57) **Abstract**

The invention relates to a device connecting method when implementing dynamic networking in a home network which is used to manage a peer-to-peer device in a network without a resource management device. The device connecting method includes the steps of: sending a device connecting request from a connection initiating device to a connection target device; generating a connection challenge value randomly by the connection target device and sending it to the connection initiating device; generating a connection reply value according to the connection challenge value by the connection initiating device and sending it to the connection target device; sending a connection response message from the connection target device to the connection initiating device according to the connection reply value; and judging a result of connection according to the connection response message, by the connection initiating device, when the connection response message represents successful, establishing a peer-to-peer connection between the connection initiating device and the connection target device. A connection disconnecting method includes the steps of: if one of devices having a peer-to-peer connection relation sends a connection disconnecting message to the other, then the connection being able to be disconnected. The initiating and target devices can be a service providing device and a service utilizing device one another.

## Description

### BACKGROUND OF THE INVENTION

### FIELD OF THE INVENTION

This invention relates to a computer network technique, more particularly, to a method of peer-to-peer connecting devices when implementing dynamic networking and resource sharing in a home network.

### DESCRIPTION OF THE PRIOR ART

With the rapid development of computer and network technologies and individual requirements to digitalization and informatization of lives, Home Network (such as Smart Home, Electronic Home, e-Home, Digital Family, Network Home, and Intelligent Home) has been developed as a hot technique. The home network technique is a key one for implementing digitalization of home devices. With this technique, all electrical devices in a home can be connected as a whole so as to achieve device interconnection and information transmission at anytime and anywhere.

The requirements to the home network are completely different from those to a commercial network, such as it does not need any additional wiring, and should be easy to use, low cost and so on. The existing network techniques suitable to home device interconnection such as HomePNA can implement interconnections of digital devices by means of existing telephone line of each home, and easy to use without influencing normal reception of a call. The automatic control of home electrical appliances can be conveniently implemented by networking with a power line equipped in the home in which signals and data are transmitted.

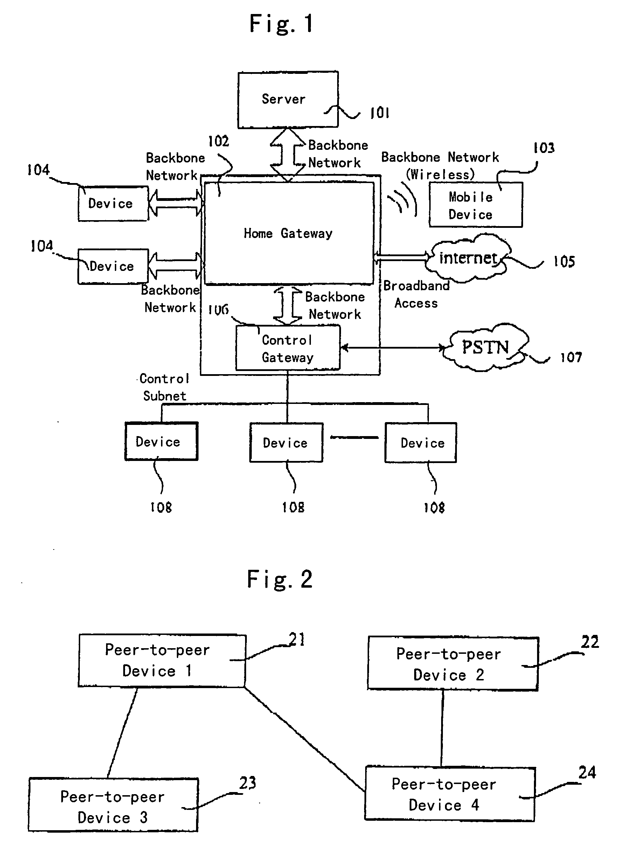

Fig.1 shows a topological structure of digital home network architecture, hierarchically including a backbone network and a control subnet. The networking forms of a home backbone network includes two parts of a wired access (a wired backbone network) and a wireless access (a wireless backbone network) (in order to implement interconnections of some wireless devices and make users enjoy information access without limitation of time and location, the wireless backbone network is an indispensable part of the home backbone network). Generally, in the backbone network, there is one home network server 101 which is a processing center and a storing center of the digital home and can be one PC device or a dedicated server. A home gateway 102 in the backbone network is used to effect the interconnections among an internal device 104 of the home network and a mobile device 103 and a broadband access of the home such that the devices 103 and 104 in the home backbone network can share the information from Internet 105. The home backbone network constitutes a home information/multimedia network and implements the interconnections and resource sharing among information devices, communication devices, entertainment devices and the like. The preliminary data transmitted by the home backbone network are text, picture, audio and video etc.

The control subnet is used to effect the interconnections among devices (108) such as home electrical appliances, automatic devices and security (monitoring) apparatuses; its constitution is an important premise for achieving home automation. The data transmitted in the control subnet are mainly various control instructions to devices and status data of devices. A control gateway 106 in the control subnet, on one hand, implements the interconnections among various home devices 108, and on the other hand, implements the interconnections between the control subnet and the backbone network, and also provides external interfaces for a remote telephone alarm and a telephone remote control (implemented with Public Switched Telephone Network (PSTN) 107).

The interactions between the home backbone network and the Internet 105 have two hierarchical meanings: (1) a user may invoke services on the home backbone network remotely through the Internet; and (2) the user may access services on the Internet through the home backbone network.

The interactions between the home backbone network and the home control subnet are implemented by the control gateway 106. The control gateway 106 is responsible for performing protocol conversion between the backbone network and the control subnet such that the services in the control subnet are represented as services in the home backbone network. The operations to devices and services in the control subnet are converted into the operations to the corresponding services on the control gateway 106. In control subnet protocols, the descriptions about services are all described based on XML language. With respect to services in the control subnet, the control gateway 106 generates corresponding XML descriptions and these services are registered as backbone network services onto the control gateway 106.

In order to make users enjoy entertainments freely and lives comfortable, those various and complex electrical devices in home must be interconnected organically and cooperated. Therefore, in the backbone network of the home network architecture, the objects of high-rates transmission, high-quality services, dynamic networking and effective resource sharing of the home backbone network will be achieved by designing a reasonable and effective method (backbone network protocols) for dynamic networking and sharing resources among the devices.

In the present invention, supporting dynamic networking among various devices in home refers to that without performing network parameters configuration in a manual manner in advance, a device in the network can dynamically select relevant devices from the network so as to form a home network, which is used to implement a function that cannot be fulfilled with any single device, or to improve the performance of an original function of any single device. Resource sharing means that a device in the network can issue resources provided by itself, and can also retrieve and utilize resources provided by other devices. A direct communication and resource sharing between any two devices are implemented to extent the functions of single device.

A method for implementing dynamic networking and resource sharing among devices in a home backbone network may include the steps of:
A. connecting a home backbone network device to a local area network or a wireless local area network;
B. announcing its device information from the device by issuing announcement message in a multicasting manner;
C. acquiring existence messages of other devices, by the device, in an intercepting or searching manner;
D. constituting a home network, by a service utilizing device or a service providing device, together with a resource management device through registering to the resource management device; or constituting a home network, by more than one service utilizing devices or service providing devices, in a peer-to-peer connecting manner;
E. acquiring service information of service providing devices within the home network, by the service utilizing device which joins into the home network, through initiating a service searching request to the resource management device, and acquiring a service utilizing right for utilizing a found service providing device and the provided service through initiating a service renting request and a service invoking request to the service providing device; or acquiring, by the service utilizing device, service information and a service utilizing right for utilizing service of a service providing device which has established a peer-to-peer connection relation with the service utilizing device through initiating a service searching request, a service renting request and a service invoking request to the service providing device, and whereby acquiring utilization of the service provided by the service providing device.

Actually, the implementing procedure of service utilizing devices or service providing devices constituting a home network in a peer-to-peer connecting manner in step D of the above solution is the method of peer-to-peer connecting the devices during dynamic networking to be solved by the present invention.

### SUMMARY OF THE INVENTION

Therefore, an object of the present invention is to provide a device peer-to-peer connecting method for implementing dynamic networking in a backbone network of a home network. In the range of the home, a premise is prepared for dynamically generating the backbone network of the home network and resource sharing thereof, that is, a connecting method is designed for implementing the peer-to-peer connections of devices.

The members of the home backbone network involved in the inventive method include information devices, communication devices and entertainment devices etc., and can also interact with some home electrical appliances such as refrigerator, washing machine, television set and audio device in a manner of protocol gateway. Thus, the device involved in the inventive method refers to a carrier for providing or accepting services.

The service involved in the inventive method refers to a functional entity running on a device and satisfying a standard interface defined by a backbone network protocol.

The resource management device involved in the inventive method refers to a device being able to provide registration and service indexing functions to devices in the network.

The service providing device involved in the inventive method refers to a device providing services to other devices in the network.

The service utilizing device involved in the inventive method refers to a device utilizing services provided by other devices in the network.

The multicast involved in the inventive method refers to one sending device sending information to a certain group of receiving devices, and the unicast involved in the inventive method refers to one sending device sending information to one designated receiving device.

The object of the prevent invention is achieved by the following technical solutions.

A method of peer-to-peer connecting devices when implementing dynamic networking in a home network, including a connection creating method and a connection disconnecting method of peer-to-peer devices, which is characterized in that:
a connection configuration is performed to all devices requiring a peer-to-peer connection, which includes configuring account information containing a user name and a password for allowing connections and a maximum parallel connection number allowed by a device;
the connection creating method of peer-to-peer devices includes the steps of:
   a. sending a device connecting request from a connection initiating device in the home network to a connection target device in the network;
   b. with respect to a connection initiating device allowed to be connected, generating a connection challenge value randomly by the connection target device and sending it to the connection initiating device;
   c. generating a connection reply value according to the received connection challenge value by the connection initiating device and sending it to the connection target device;
   d. sending a connection response message from the connection target device to the connection initiating device according to the connection reply value; and
   e. judging a result of connection according to the connection response message by the connection initiating device, if the connection response message includes information on a successful connecting result, establishing a peer-to-peer connection between the connection initiating device and the connection target device;
the connection disconnecting method of peer-to-peer devices includes the steps of:
   f. sending a connection disconnecting message from the connection initiating device or the connection target device to the other;
   g. regarding, by the connection target device or the connection initiating device which receives the connection disconnecting message, that this connection has been disconnected.

In the step b, the connection target device also saves the connection challenge value; in the step c, the connection initiating device retrieves key information corresponding to the connection challenge value and generates the connection reply value together with the connection challenge value; in the step d, the connection target device judges validity of the connection reply value according to the saved connection challenge value and the key corresponding to this connection challenge value, and when it is valid, sends a connection response message about success of connection to the connection initiating device, and when it is invalid, sends a connection response message about denial of access to the connection initiating device.

The connection initiating device is a service providing device or a service utilizing device. The connection target device is a service utilizing device or a service providing device.

According to the inventive method, a device in a network can search other devices and services thereon by means of a device discovering protocol. A service utilizing device can initiate a device connection creating request to a found service providing device so as to create a peer-to-peer connection.

After receiving the device connection creating request initiated by the service utilizing device, the service providing device sends out a connection creating response message.

After the peer-to-peer connection is established between the service utilizing device and the service providing device, a transmission key is generated according to an encryption method defined in security mechanism in order to transmit subsequent data.

After the service utilizing device and the service providing device create the peer-to-peer connection, the service utilizing device initiates a service searching procedure to the service providing device so as to acquire detailed service information on the service providing device, initiates a service renting procedure to the service providing device so as to acquire a right to utilize the service, and initiates a service invoking request to the service providing device so as to utilize the service.

When the service utilizing device does not need the service of the service providing device any more, it can disconnect the connection with the service providing device at anytime. The service providing device in one peer-to-peer connection relation can disconnect the connection with the service utilizing device at anytime.

In the home network, with the inventive device peer-to-peer connecting method, the dynamic networking among any peer-to-peer devices within the network range without a resource management device can be simply implemented.

### BRIEF DESCRIPTION OF THE DRAWINGS

Figure 1 is a diagram of a topological structure of a digital home network architecture.

Figure 2 is a schematic diagram of a network structure when performing a peer-to-peer connection in a home network device management.

Figure 3 is flow chart of a device peer-to-peer connecting procedure of a inventive method.

### DETAILED DESCRIPTION OF THE PREFERRED EMBODIMENTS

The key idea of a home network is to implement interconnection and communication as well as resource sharing among devices dynamically. When there is a master control device, that is, a resource management device, in the network, a centralized management to devices can be achieved by registration and cancellation procedures of the master control device to various devices in the network. However, not in all home network environments, there will be a stationary resource management device. Therefore, the method according to the present invention is adapted to a home network environment without a resource management device. A simple device management is achieved by a peer-to-peer connecting mechanism among peer-to-peer devices so as to achieve the interconnection and communication as well as resource sharing among devices.

For the convenience of describing the inventive device peer-to-peer connecting method, the home network structure of Fig. 1 can be simplified as the structure as shown in Fig. 2.

Referring to Fig. 2, a plurality of information devices are included in the composition of home electrical appliances, for example, a peer-to-peer device 1 (21), a peer-to-peer device 2 (22), a peer-to-peer device 3 (23) and a peer-to-peer device 4 (24). A peer-to-peer device can refer to either a service providing device or a service utilizing device. There is no resource management device in a peer-to-peer connected home network.

In the method according to the invention, when a peer-to-peer device connection is performed, there is one connection initiating device and one connection target device. In which, the connection target device is designated by the connection initiating device. A piece of software is necessarily added into the both devices to perform communications therebetween so as to implement a peer-to-peer connection.

A device discovering procedure is prior to the connection of devices, and is performed between the connection initiating device and the connection target device. The connection initiating device firstly discovers the connection target device through the device discovering procedure, and whereby can start a device connecting procedure.

As described in the Background of The Invention, in the implementing method of dynamic networking and resource sharing, steps B and C are the device discovering procedure, and include two procedures of device announcing and device searching.

When the devices in the home network are powered on, the software running thereon announces its own existence information and relevant security requirement information into the network in a multicasting manner according to the device announcing method. The devices in the network can acquire the existence information of other devices by intercepting such device announcement information (including type of device, IP address of device and service information provided by the device). The devices in the network can send device searching information in a multicasting manner. When a device receiving the multicast searching information finds that its own conditions is consistent with the searching conditions in the searching request, it returns announcement information of itself in a unicasting manner. By means of such device announcing and device searching steps, all devices in the home network can discover each other.

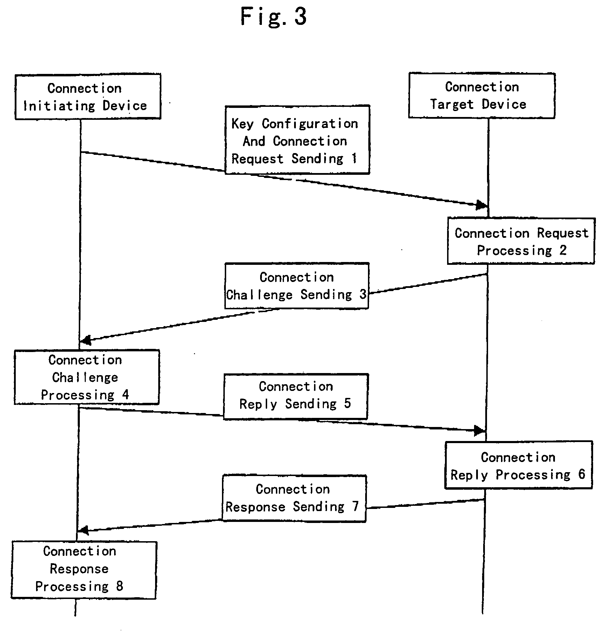

Referring to Fig. 3, the steps as shown represent a connecting procedure of peer-to-peer devices. The connecting procedure starts with sending a device connecting request, by a connection initiating device, to a connection target device.

If the security property of a service providing device is set as that authentication is needless (which is set in the device announcement), then the service providing device allows connection creating request of anyone of service utilizing devices, and sends a connection creating response message to the service utilizing device.

If the security property of a service providing device is set as that authentication is needed (which is set in the device announcement), the service providing device and the service utilizing device apply a connection creation process in accordance with the steps shown in the drawing. An entire device connecting procedure includes 8 steps of key configuration and connection request sending, connection request processing, connection challenge value sending, connection challenge value processing, connection reply value sending, connection reply value processing, connection response value sending, and connection response value processing.

Before performing Step 1, a device information setting and a key configuration are necessarily performed. The administrator of the home network performs connection setting for all devices (connection initiating devices and connection target devices) desiring to support peer-to-peer connections, which includes configuring account information allowing to connect which comprises user name and password for all devices, in which when the devices themselves have a human-machine interface, the configuration is performed through the human-machine interface, whereas for those devices without a human-machine interface, a remote setting to them can be performed through a device with a human-machine interface; and further configuring an allowed maximum parallel connection number for each device.

In Step 1, key configuration and connection request sending, a connection initiating device (such as a service utilizing device) sends it to a connection target device (such as a service providing device), the device connecting procedure starts.

The device connecting request information sent from the connection initiating device to the connection target device includes four fields of type of message, serial number of message, user name and serial number of connection request. The names, content and value ranges of respective fields are as shown in the following table.

| Field Name | Content | Value Range |
|---|---|---|
| Type of message | connection creating request | a character string (ConnectRequest) |
| Serial number of message | serial number of protocol message | an unsigned integer more than 1 |
| User name | indicating user's information of the device | a character string whose length is more than 1 and less than 32 |
| Serial number of connection request | request's serial number during the connecting procedure | [1] |

In Step 2, connection request processing, the connection target device conducts processing. When the connection target device receives the connection request from the connection initiating device, it firstly judges whether the number of connection initiating devices currently connected with the present connection target device has reached the upper limit of the allowed connection number. If so, it returns a connection response message whose connecting result is overload (OVERLOAD) in a subsequent step, and this device connecting procedure is ended. Otherwise, it further judges whether the user information of the connection initiating device is in the present connection target device according to the user information indicated in the device connecting request. If not so, then it returns a connection response message whose connecting result is denial of access (ACCESSDENIED). Otherwise, a challenge value whose length is 32 bits are randomly generated, and based on which, a connection challenge value message is generated in order to be sent to the connection initiating device, and the challenge value is also saved for later usages (such as waiting for the arrival of a response value so as to make a comparison).

In Step 3, connection challenge value sending, the connection target device sends it to the connection initiating device.

The procedure of sending the connection challenge value is also the procedure of the service providing device sending the connection creating response message to the service utilizing device. The connecting result is included in the response message in order to notify the service utilizing device of carrying out corresponding process according to the result. The response message also includes an identity authenticating algorithm identifier ID used by the service providing device and the challenge value ChallengeValue randomly selected by the service utilizing device. The names, contents and value ranges of respective fields of the connection creating response message are as shown in the following table.

| Field Name | Content | Value Range |
|---|---|---|
| Type of message | connection creating response | ConnectResponse |
| Serial number of message | serial number of protocol message | an unsigned integer more than 1 |
| Serial number of connection response | serial number of connection response | 1 |
| Connecting result | reply character string | SUCCESS or OVERLOAD or ACCESSDENIED or AUTHENTICATE |
| Identity authenticating algorithm | authenticating algorithm identifier ID | ShareKey |
| Challenge value | ChallengeValue | a 32 bits long character string |

In Step 4, connection challenge value processing, it is carried out by the connection initiating device. After receiving the connection challenge value message, the connection initiating device should retrieve whether there is key information corresponding to the challenge value in the device itself. If there isn't, then the present connection is failed, and the present connecting procedure is ended.

Otherwise, a reply value (a response value, Response) should be generated in accordance with the security mechanism according to the challenge value and the key (after receiving the identity authenticating algorithm identifier ID and the challenge value, the connection initiating device encrypts the challenge value with its own key), and is sent to the connection target device.

In Step 5, connection reply value sending, after generating the connection reply value, the connection initiating device sends it to the connection target device. This connection reply message includes four fields of type of message, serial number of message, serial number of connection request and reply value. The names, contents and value ranges of respective fields are as shown in the following table.

| Field Name | Content | Value Range |
|---|---|---|
| Type of message | connection creating request | ConnectRequest |
| Serial number of message | serial number of protocol message | an unsigned integer more than 1 |
| Serial number of connection request | request's serial number during the connecting procedure | 2 |
| Reply value | reply character string | a 32 bits long character string |

In Step 6, connection reply value processing, it is carried out by the connection target device. After receiving the connection reply value sent from the connection initiating device, the connection target device should judge whether this reply value is valid according to the saved challenge value and its corresponding key. If it is valid, the connection target device sends a connection response message containing success of connection to the connection initiating device; otherwise, a connection response message containing information about wrong key is sent. Specifically, the connection target device decrypts the challenge value with a shared key KeyID corresponding to the ID announced by the connection initiating device. If Response = Encrypt (KeyID, ChallengeValue), then the connection is allowed to be created, and also a response of connection success is sent to the connection initiating device, and the environment of connection is prepared. If Response <> Encrypt (KeyID, ChallengeValue), then the connection is not allowed to be created, and also a response of creation failure is sent to the service utilizing device, and the information corresponding to the device is deleted.

If the connection target device regards that the present connection is successful, then the connection numbers of both devices connected should be increased.

In which, the judgment whether the configuration of the key and the reply value is valid or not should be carried out in accordance with the security mechanism.

In Step 7, connection response message sending, the connection target device sends it to the connection initiating device. The connection target device sends a connection response message according to the result of reply value processing. The connection response message includes four fields of type of message, serial number of message, serial number of connection response message and connecting result. The names, contents and value ranges of respective fields are as shown in the following table.

| Field Name | Content | Value Range |
|---|---|---|
| Type of message | connection creating response | ConnectResponse |
| Serial number of message | serial number of protocol message | an unsigned integer more than 1 |
| Serial number of connection response message | serial number of connection response message | 2 |
| Connecting result | reply character string | SUCCESS or OVERLOAD or ACCESSDENIED or |
| | | AUTHENTICATE |

In Step 8, connection response message processing, it is carried out by the connection initiating device. After receiving the connection response message, the connection initiating device can immediately judge the present connection is successful or not.

After the connection relation is established between two devices, a connection disconnection can be performed at anytime. The connection disconnection includes two steps of connection disconnecting request and connection disconnecting request message processing.

During the connection disconnecting request, any one of the devices (the initiating connection device or the target connection device) can both initiate a connection disconnecting request to the other device at any time to disconnect the established connection. The sent connection disconnecting request message includes three fields of type of message, serial number of message and reason for disconnecting connection (normal or protoerror). The names, contents and value ranges of respective fields are as shown in the following table.

| Field Name | Content | Value Range |
|---|---|---|
| Type of message | connection disconnecting message | Disconnect |
| Serial number of message | serial number of protocol message | an unsigned integer more than 1 |
| Reason for disconnecting connection | reasons for disconnecting the connection | NORMAL or PROTOERROR |

In order to ensure that no fraudulent device connection disconnecting request occurs, the sending of the device connection disconnecting request should be transmitted according to the encrypting method defined in the security mechanism.

During the connection disconnecting message processing, when any one of the devices with an established connection relation receives the connection disconnecting request from the other device, it regards that the present connection is disconnected, and at the same time, the both devices should decrease the connection numbers thereof.

In the inventive method, the devices in the network are managed, connection and disconnection among various devices are implemented and the dynamic networking and resource sharing in the extent of home network when there is not resource management device are achieved by means of a peer-to-peer connection mechanism cooperating with the home backbone network protocol.

## Claims

1. A method of peer-to-peer connecting devices when implementing dynamic networking in a home network, including a connection creating method and a connection disconnecting method of peer-to-peer devices, which is **characterized in that**:
a connection configuration is performed to all devices requiring a peer-to-peer connection, which includes configuring account information containing a user name and a password for allowing connections and a maximum parallel connection number allowed by a device;
said connection creating method of peer-to-peer devices includes the steps of:
a. sending a device connecting request from a connection initiating device in the home network to a connection target device in the network;
b. with respect to the connection initiating device allowed to be connected, generating a connection challenge value randomly by the connection target device and sending it to the connection initiating device;
c. generating a connection reply value according to the received connection challenge value by the connection initiating device and sending it to the connection target device;
d. sending a connection response message from the connection target device to the connection initiating device according to the connection reply value; and
e. judging a result of connection according to the connection response message by the connection initiating device, if the connection response message includes information on a successful connecting result, establishing a peer-to-peer connection between the connection initiating device and the connection target device;
said connection disconnecting method of peer-to-peer devices includes the steps of:
f. sending a connection disconnecting message from the connection initiating device or the connection target device to the other;
g. regarding, by the connection target device or the connection initiating device which receives the connection disconnecting message, that this connection has been disconnected.

2. The method of peer-to-peer connecting devices when implementing dynamic networking in a home network according to Claim 1, wherein said connection setting to devices is a direct setting through a human-machine interface on devices or a remote setting through other devices having human-machine interfaces.

3. The method of peer-to-peer connecting devices when implementing dynamic networking in a home network according to Claim 1, wherein said connection initiating device is a service providing device or a service utilizing device, and said connection target device is a service utilizing device or a service providing device.

4. The method of peer-to-peer connecting devices when implementing dynamic networking in a home network according to Claim 1, wherein with respect to the device connecting request in said step a, the message fields include type of message, serial number of message, user name and serial number of connection request.

5. The method of peer-to-peer connecting devices when implementing dynamic networking in a home network according to Claim 1, wherein in said step b, said connection allowed further includes the steps of: judging whether the number of connection initiating devices currently connected with the connection target device has reached the upper limit of the allowed connection number; and judging whether the user information of the connection initiating device is in the connection target device.

6. The method of peer-to-peer connecting devices when implementing dynamic networking in a home network according to Claim 5, wherein when in the step b, the number of devices connected with the connection target device has already reached the upper limit of the allowed number of connected devices, then in the step e, the connection target device sends a connection response message whose connecting result is overload to the connection initiating device; when in step b, there is no user information of the connection initiating device is present in the connection target device, then in the step e, the connection target device sends a connection response message whose connecting result is denial to access to the connection initiating device.

7. The method of peer-to-peer connecting devices when implementing dynamic networking in a home network according to Claim 1, wherein the connection challenge value sent in said step b includes type of message, serial number of message, serial number of connection response message, connecting result, authenticating algorithm identifier and challenge value.

8. The method of peer-to-peer connecting devices when implementing dynamic networking in a home network according to Claim 1, wherein the message of challenge reply value sent in said step c includes type of message, serial number of message, serial number of connection request and the reply value constituted by a reply character string.

9. The method of peer-to-peer connecting devices when implementing dynamic networking in a home network according to Claim 1, wherein with respect to the connection response message in said step d, the message fields include type of message 2, serial number of message, serial number of connection response message and connecting result.

10. The method of peer-to-peer connecting devices when implementing dynamic networking in a home network according to Claim 1, wherein said step d further includes the steps of: if the connection target device sends a response message containing information about successful connection to the connection initiating device, then the connection target device and the connection initiating device increasing the number of currently connected devices by one.

11. The method of peer-to-peer connecting devices when implementing dynamic networking in a home network according to Claim 1, wherein in said step b, said connection target device also saves the connection challenge value; in said step c, said connection initiating device retrieves key information corresponding to the connection challenge value and generates said connection reply value together with the connection challenge value; in said step d, the connection target device judges validity of the connection reply value according to the saved connection challenge value and the key corresponding to this connection challenge value, and when it is valid, sends a connection response message about success of connection to the connection initiating device, and when it is invalid, sends a connection response message about denial of access to the connection initiating device.

12. The method of peer-to-peer connecting devices when implementing dynamic networking in a home network according to Claim 1, wherein after said step c, a transmission key is generated between the connection initiating device and the connection target device which have established a peer-to-peer connection therebetween in accordance with an encryption method defined in a security mechanism, and is used to transmit subsequent data.

13. The method of peer-to-peer connecting devices when implementing dynamic networking in a home network according to Claim 1, wherein with respect to the connection disconnecting request message in said step f, the message fields include type of message, serial number of message and reason for disconnecting connection.

14. The method of peer-to-peer connecting devices when implementing dynamic networking in a home network according to Claim 1, wherein said steps f and g further include the steps of: while the connection target device and the connection initiating device sends and receives the connection disconnecting request, they decrease the number of currently connected devices by one.
